# EUROPÄISCHE PATENTANMELDUNG

(11) **EP 4 636 518 A1**
(43) Veröffentlichungstag der Anmeldung: **22.10.2025**
(21) Anmeldenummer: 25169357.8
(22) Anmeldetag: 09.04.2025
(51) Int. Cl.: G05B 19/418

(54) **VERFAHREN ZUM HERSTELLEN EINES FERTIGPRODUKTS MIT EINER OPTIMIERTEN PRODUKTIONSREIHENFOLGE IN EINER WALZSTRASSE**

(30) Priorität: 12.04.2024 DE 102024203393
(71) Anmelder: SMS Group GmbH, 41069 Mönchengladbach (DE)
(72) Erfinder: Mers, Volker, 42327 Wuppertal (DE); Letzel, Dirk, 40882 Ratingen (DE); Hassel, Christoph, 47249 Duisburg (DE); Runde, Wilfried, 47506 Neukirchen-Vluyn (DE); Plociennik, Uwe, 40882 Ratingen (DE)
(74) Vertreter: Hemmerich & Kollegen

(57) **Zusammenfassung**

Die Erfindung betrifft ein Verfahren zum Warmumformen von Vormaterial, insbesondere Brammen oder Knüppeln, zu Fertigprodukten mittels einer Warmumformeinrichtung (1), umfassend die Schritte:
- Festlegen eines Soll-Lagerbestandes (S) der Fertigprodukte;
- Vorbestimmen eines Zulaufes von heißem Vormaterial (6) zur Umformanlage (2);
- Erfassen eines Lagerbestandes an kaltem, warmem und/oder heißem Vormaterial;
- Optimieren der Produktionsaufträge (P), der Reihenfolge der Produktionsaufträge (Pₙ) und des Materialflusses zwischen dem Zulauf von heißem Vormaterial (6), dem Lager (3) und der Umformanlage (2) durch die übergeordnete Steuerung oder Regelung (7), wobei die Optimierung vorzugsweise den Energiebedarf minimiert; und
- Herstellen der Fertigprodukte mittels der Warmumformeinrichtung (1) in der optimierten Produktionsreihenfolge (Pₙ).

## Beschreibung

### Gebiet:

Die Erfindung betrifft ein Verfahren zum Herstellen eines Fertigproduktes mit einer optimierten Produktionsreihenfolge in einer Walzstraße

### Stand der Technik:

Üblicherweise wird die Produktionsreihenfolge in einer Walzstraße von den Anforderungen des Fertiglagers oder alternativ von den vorgeschalteten Prozessschritten der Herstellung der Vorprodukte bestimmt. In einer Walzstraße wird ein heißes Vormaterial zu einem Fertigprodukt umgeformt. Das Vormaterial kann dabei durch einen Ofen von einer aktuellen Temperatur, beispielsweise Raumtemperatur, auf die Anstichtemperatur aufgeheizt werden oder aus einem vorhergehenden Bearbeitungsschritt heiß übernommen werden.

Durch die Wartezeiten von heißem Vormaterial an den unterschiedlichen Stellen entstehen Energieverluste, die durch entsprechende Heizeinrichtungen nachträglich ausgeglichen werden müssen. Insbesondere bei dem Transport von heißem Material in einer Walzstraße vor dem ersten Anstich entsteht ein Temperaturverlust an dem Vormaterial. Diese können beispielsweise durch eine Induktionsheizung ausgeglichen werden, da werkstoff- und abmessungsabhängige Anstichtemperaturen vor dem ersten Anstich zwingend eingehalten werden müssen.

Die WO 2020/260 361 A1 offenbart ein Verfahren bei der eine Reihe von verschiedenen Produktionsprozessen bzw. Anlagen miteinander datentechnisch verknüpft werden die gemeinsam an der Herstellung beteiligt sind und durch einen Optimierungsalgorithmus die Produktionsplanung hinsichtlich unterschiedlicher Ziele optimiert werden können.

Die EP 1 590 104 A1 beschreibt eine Kombination aus einer Stranggießanlage und einer Walzstraße, wobei zwischen den beiden Anlagen ein Zwischenspeicher für unterschiedliche Brammenabmessungen vorgesehen ist. Die unterschiedlichen Brammen können sowohl von der Stranggießanlage als auch von externen Lagern dem Zwischenspeicher zugeführt werden. Die Produktionsplanung und der Abruf der Brammen aus dem Zwischenspeicher werden so optimiert, dass ein kontinuierlicher Betrieb der Walzstraße gewährleistet ist.

In der EP 1 951 916 B1 wird ein Verfahren dargestellt, bei dem eine Heizeinrichtung eine Bramme nach der Stranggießanlage vorheizt bzw. auf Temperatur hält oder eine Zwischenerwärmung des Warmbandes durchführt. Mittels eines Rechenmodells wird der Temperaturverlauf des Warmbandes vorausberechnet und die Heizeinrichtungen so gesteuert, dass die Bramme bzw. das Warmband im gesamten Prozess eine zuvor definierte kritische Temperatur nicht unterschreiten.

Nachteilig an den aus dem Stand der Technik bekannten Verfahren ist, dass stets von einer zuvor festgelegten Produktionsreihenfolge für ein Zielprodukt ausgegangen wird, die beibehalten wird und wobei innerhalb der Produktionsreihenfolge die Gewichtungen und Optimierungen erfolgen.

### Aufgabe der Erfindung:

Die Produktionsplanung und die Steuerung einer Walzstraße dahingehend zu optimieren, dass Fertigprodukte mit einem geringeren Energiebedarf produziert werden können.

### Erfindung:

Die Aufgabe der Erfindung wird gelöst durch ein Verfahren mit den Merkmalen des Anspruch 1.

Vormaterial, insbesondere Brammen oder Knüppel, wird zu, insbesondere einer Reihe von unterschiedlichen, Fertigprodukten mittels einer Warmumformeinrichtung umgeformt, wobei die Warmumformeinrichtung zumindest eine Anlage zum Umformen, ein Lager für kaltes, warmes oder heißes Vormaterial, ein Lager für das Fertigprodukt, eine Temperaturbeeinflussungseinrichtung für das Vormaterial, eine unmittelbare Zulaufmöglichkeit von heißem Vormaterial, insbesondere von einer Stranggießanlage, und eine übergeordnete Steuerung oder Regelung für die Produktionsprozesse aufweist.

Anlagen zum Umformen können durch Walzgerüste, Schmiedehämmer, Schmiedepressen und / oder Gesenkschmieden ausgebildet werden. Die Anlage zum Umformen kann auch durch eine Vielzahl derartiger Einzelanlagen ausgebildet werden, die in Reihe oder parallel zueinander angeordnet sind.

Das Vormaterial ist im erfindungsgemäßen Sinne dadurch gekennzeichnet, dass es in unterschiedlichen Abmessungen, Werkstoffen und Temperaturzuständen vorliegt. Das Vormaterial muss nicht aus einer der Umformeinrichtung zugeordneten Stranggießanlage stammen, sondern kann auch der Umformeinrichtung extern, beispielsweise von einem anderen Stahlwerk, heiß, warm oder kalt zugeführt werden.

Bei dem Verfahren werden zumindest die Schritte ausgeführt:
- Festlegen eines Soll-Lagerbestandes der Fertigprodukte mit Menge, Abmessung, Werkstoff, Werkstoffeigenschaften und einem Abrufzeitraum;
- Vorbestimmen eines Zulaufes von heißem Vormaterial zur Umformanlage mit zumindest den Parametern Menge, Abmessung, Werkstoff und einer Temperatur, wobei die jeweilige Temperatur des heißen Vormaterials durch ein Temperaturmodell und / oder einer Messung fortlaufend aktualisiert und an die übergeordnete Steuerung oder Regelung übergeben wird;
- Erfassen des Lagerbestandes von kaltem, warmen und/oder heißem Vormaterial mit zumindest der verfügbaren Menge, Abmessung und Werkstoff;
- Optimieren der Produktionsaufträge, der Reihenfolge der Produktionsaufträge und des Materialflusses zwischen dem Zulauf von heißem Vormaterial, dem Lager und der Umformanlage durch die übergeordnete Steuerung oder Regelung, wobei der Optimierung vorzugsweise den Energiebedarf minimiert, insbesondere den Energiebedarf unter Berücksichtigung der CO₂-Emission des dazu notwendigen Energieträgers, oder den Energiebedarf der Temperaturbeeinflussungseinrichtung; und
- Herstellen der Fertigprodukte mittels der Warmumformeinrichtung in der optimierten Produktionsreihenfolge, wobei für jeden Produktionsauftrag zumindest die Anstichbedingungen in der ersten Anlage zur Umformung mit Prozessparametern, einem Vormaterial und einem Zeitpunkt zur Umformung bestimmt werden.

Bei der Umformeinrichtung bzw. Warmumformeinrichtung handelt es sich beispielsweise um eine Walzstraße bzw. Warmwalzstraße.

Als Werkstoff im erfindungsgemäßen Sinne wird ein spezifischer Werkstoff, eine Werkstoffgruppe oder auch die spezifische Analyse eines einzelnen Vorproduktes angesehen. Der Abrufzeitraum ist erfindungsgemäß ein Zeitraum, bspw. eine Woche oder Produktionszyklus, in dem der Soll-Lagerbestand erreicht werden soll.

Lagerbestände können sowohl kalt als auch unterschiedlich warm beziehungsweise heiß vorliegen. Heiße Lagerbestände können im erfindungsgemäßen Sinne auch in Wärmebehandlungseinrichtungen und / oder isolierten Hauben gelagert sein.

Die Temperaturbeeinflussungseinrichtung ist zweckmäßigerweise dazu ausgebildet das Vormaterial aufzuheizen und/oder abzukühlen.

Kalte Lagerbestände können Lagerbestände aus nicht eingesetzten Produkten der vorhandenen Anlage sein oder alternativ auch von anderen Anlagen bereit gestellte Produkte sein. Die kalten Lagerbestände weisen eine Temperatur von < 100 °C auf, so dass eine entsprechend intensive Aufheizung auf Umformtemperatur erforderlich ist. Da eine Urformanlage, wie beispielsweise eine Stranggießanlage eine geringere Produktionsleistung aufweist als eine Umformanlage, ist die externe Bereitstellung weiterer Produkte für die Gesamtauslastung und Produktivität der Umformanlage vorteilhaft. Für einige besondere Legierungen, wie beispielsweise Röhrenstähle und Elektrostähle sind besondere Legierungszusätze, Lösungsvorgänge und Ausscheidungsvorgänge erforderlich, die entsprechenden Zeitaufwand und Temperaturführungen notwendig machen. Daher werden solche Legierungen oft separat urgeformt und zur Umformung (kalt) an die Umformanlage zur Weiterverarbeitung transportiert.

Warme Lagerbestände können Lagerbestände aus nicht eingesetzten Produkten der vorhandenen Anlage sein oder alternativ auch von anderen Anlagen bereitgestellte Produkte sein. Die warmen Lagerbestände weisen eine Temperatur von > 100 °C und < 750°C auf. Warme Lagerbestände können gegen weitere Auskühlung geschützt sein, indem sie entweder abgedeckt sind und/oder in Warmhaltebereichen gelagert werden. Die notwendige Aufheizung ist moderat.

Heiße Lagerbestände können entweder unmittelbar stromauf der Umformanlage hergestellte Produkte sein oder in einem Heißlager eigelagerte Produkte sein. Die heißen Lagerbestände oder das heiße Vormaterial weist Temperaturen von > 750° C auf und kann ohne besondere zusätzliche Aufwärmschritte der Temperaturbeeinflussungseinrichtung stromaufwärts der Umformanlage zugeführt werden.

Im Rahmen der Optimierung und einer optionalen Re-Optimierung wird auf die Minimierung des Kalt-Lagerbestandes hingearbeitet, um die notwendigen, energieintensiven Aufheizprozesse gleichermaßen zu begrenzen. Je wärmer ein eingesetztes Produkt ist, desto geringer ist der sog. CO₂-Fußabdruck. Vor dem Hintergrund ist es vorteilhaft möglichst viel heißes Vormaterial vorzuhalten, z.B. aus der laufenden Produktion einer Stranggießanlage.

Durch die Verknüpfung der Lagerbestände von kaltem, warmem und heißem Vormaterial und heißem Zulauf mit einer übergeordneten Steuerung oder Regelung und einer Energieoptimierung kann für die zu produzierende Fertigmaterialen eine energieminimierte Produktionsreihenfolge ermittelt werden. Die Energieoptimierung kann hinsichtlich einzelner Fertigprodukte oder auch hinsichtlich der Energieoptimierung einer gesamten Produktionsreihenfolge, wie beispielsweise einer gesamten Walzkampagne, erfolgen. Dies führt unmittelbar zu einer Einsparung von Energieträgern, insbesondere von Erdgas und Strom, in der Umformanlage (Walzstraße), aber auch in den Temperaturbeeinflussungseinrichtungen, sowie in den Lagern.

Unterschiedliche Optimierungsalgorithmen sind aus dem Stand der Technik bekannt. Eine Gefügemodellierung für einen Mehrphasen-Stahl ist beispielsweise aus der DE 10 2016 100 811 A1 oder der US 2017 029 84 91 bekannt.

Weitere vorteilhafte Ausführungen des Verfahrens sind in den abhängigen Ansprüchen 2 bis 15 dargestellt.

Die Optimierung basiert beispielsweise auf einem Algorithmus aus der Gruppe der Mixed Integer Linear Programming Algorithmen (MILP). Ein Traveling-Salesman-Algorithmus wird bevorzugt zur Optimierung der Reihenfolge der Produktionsaufträge verwendet, wobei ein Ort im Traveling-Salesman-Algorithmus durch den einzelnen Produktionsauftrag und die Kosten im Traveling-Salesman-Algorithmus durch Gewichtungsfaktoren, vorzugsweise repräsentativ für den Energieverbrauch, die CO₂-Emission, das Gefüge, den Durchsatz, die Anlagenparameter und / oder die Produktionsbedingungen, ersetzt werden.

Durch ein mit der übergeordneten Steuerung oder Regelung datentechnisch verbundenes mathematisch-physikalisches Modell (Prozessmodell) können die physikalischen Prozesse in der Herstellung zumindest teilweise abgebildet werden, insbesondere die Parameter des Produktionsprozesses, um so die Optimierung zu unterstützen. Gerade die Modellierung von Temperaturverlauf und Gefügeentwicklung können vorteilhaft abgebildet werden, um zielgenau die Herstellung des Soll-Produktes mit seinen Eigenschaften einzustellen.

Nach einer vorteilhaften Variante der Erfindung umfasst das Verfahren weiterhin den Schritt des Bestimmens des Gefüges und / oder der Ausscheidungen für jedes Vormaterial durch ein mit der übergeordneten Steuerung oder Regelung des Produktionsprozesses verbundenes Werkstoffmodell auf Basis der Temperatur, dem Werkstoff und dem Zeitverlauf. Dadurch wird die Genauigkeit und das Optimierungspotenzial des erfindungsgemäßen Verfahrens weiter verbessert.

Insbesondere umfasst das erfindungsgemäße Verfahren den Schritt des Re-optimierens der Produktionsaufträge, der Reihenfolge der Produktionsaufträge und des Materialflusses zwischen der Zulaufmöglichkeit von heißem Vormaterial, dem Lager und der Umformanlage durch die Steuerung oder Regelung. Durch die Re-optimierung kann das Verfahren unmittelbar auf sich ändernde äußere Umstände reagieren, wie beispielsweise Änderungen hinsichtlich des Zulaufes an heißem Vormaterial oder geänderten Lagerbeständen an kaltem, warmen und heißem Vormaterial.

Die Re-optimierung kann iterativ und/oder ereignisgesteuert erfolgen. Bei eine iterativen Re-optimierung wird die Optimierung in regelmäßigen Abständen wiederholt, während bei der ereignisgesteuerten Re-optimierung die Optimierung durch sich ändernde äußere Umstände veranlasst wird. Es ist auch eine Kombination beider Varianten möglich.

Vorzugsweise umfasst die Re-optimierung eine Umplanung des herzustellenden Produktes, die Einlagerung von Produkten in das Lager (3), die Umwidmung eines fertigen Produktes, oder dergleichen.

Vorzugsweise speichert ein stromaufwärts der Anlage zur Umformung, vorzugsweise ein Walzgerüst, positionierter, noch mehr bevorzugt ein isolierter, Speicher heißes Vormaterial vor einer Abgabe an die Anlage zur Warmumformung zwischen. Dies können beispielsweise Durchlaufspeicher oder isolierte Hauben sein. Die Zwischenspeicherung von heißem Material ermöglicht einen flexiblen Abruf des heißen Vormaterials und kann genutzt werden unterschiedliche Produktionsgeschwindigkeiten von Stranggießanlagen oder Produktionsreihenfolgen mit der Produktionsreihenfolge der Walzstraße zu verknüpfen bzw. zu flexibilisieren.

Für den Soll-Lagerbestand der Fertigprodukte werden bevorzugt die Werkstoffeigenschaften für die Fertigprodukte festgelegt. Aus einem Werkstoff können durch unterschiedliche Walzbedingungen unterschiedliche Werkstoffeigenschaften erzeugt werden. Das Festlegen der Werkstoffeigenschaften ermöglicht eine genauere Produktionsplanung.

Bei der Optimierung des Energiebedarfes müssen bevorzugt die qualitätsbestimmenden Parameter des Fertigproduktes eingehalten werden. Qualitätsbestimmende Parameter im Sinne der Erfindung sind beispielsweise die Abmessung, die Werkstoffeigenschaften und / oder andere für den Abnehmer oder in der weiteren Verarbeitung wichtige Eigenschaften des Fertigproduktes. Durch die zwingende Einhaltung der qualitätsbestimmenden Parameter wird der Lagerbestand an Fertigprodukten nicht durch zu viele nicht passende Fertigprodukte aufgefüllt.

In dem Speicher werden bevorzugt mehr als zwei, noch mehr bevorzugt mehr als 5, heiße Vormaterialien zwischengespeichert. Zweckmäßigerweise kann ein heißes Vormaterial unabhängig von der Einlagerungsreihenfolge entnommen und der Anlage zur Umformung zugeführt werden. Dadurch kann der Speicher flexibel genutzt und Optimierungspotentiale besser ausgeschöpft werden.

Vorzugsweise werden für den Soll-Lagerbestand der Fertigprodukte die Werkstoffeigenschaften für die Fertigprodukte festgelegt.

In einer erfindungsgemäßen Variante wird bei der Optimierung des Energiebedarfes die Einhaltung der qualitätsbestimmenden Parameter des Fertigproduktes gewährleistet.

In einer stromaufwärts der Anlage zur Umformung positionierte, Temperaturbeeinflussungseinrichtung wird vorzugsweise kaltes, warmes oder heißes Vormaterial wärmebehandelt und dadurch ein spezifisches Gefüge, vorzugsweise Korngröße und / oder Ausscheidungen, vor einer Abgabe an die Umformanlage eingestellt. Die für die Wärmebehandlung notwendigen Energiemengen und Temperaturen werden bei der Optimierung des Energiebedarfs berücksichtigt. Eine Reihe von Werkstoffen benötigt vor der ersten Warmumformung eine spezifische Wärmebehandlung, da sonst mechanische Eigenschaften nicht erreicht oder qualitative Ziele nicht erreicht werden können. Durch die unmittelbare Einplanung der Wärmebehandlung in den Temperaturverlauf der Umformanlage kann Restwärme aus der Wärmebehandlung genutzt werden.

Vorzugsweise werden nicht umgeformte Brammen oder Knüppel oder vorumgeformtes Vormaterial aus Brammen oder Knüppeln als Vormaterial verwendet.

Das Vormaterial (Halbzeug) kann aus einem Strangguss oder aus einem Blockguss stammen. Für derartige Vorprodukte sind Produktionsprozesse in Walzstraßen bekannt, so dass die Anstichbedingungen, insbesondere für Stahlwerkstoffe, gut bekannt sind.

Bevorzugt werden als Fertigprodukt gewalzter Stabstahl, Profile und / oder Träger hergestellt.

Bevorzugt wird ein geschmiedeter Rohling, vorzugsweise mittels einer nicht beanspruchten Gesenkschmiede oder Schmiedepresse, als Fertigprodukt hergestellt.

Bevorzugt wird ein Warmband oder Blech als Fertigprodukt hergestellt.

Eine technische Störung in einer Anlage der Warmumformeinrichtung wird bevorzugt durch die übergeordnete Steuerung oder Regelung erfasst und bei dem Erfassen einer technischen Störung zumindest das Optimieren der Produktionsaufträge, der Reihenfolge der Produktionsaufträge und des Materialflusses zwischen der Zulaufmöglichkeit von heißem Vormaterial, dem Lager und der Umformanlage erfolgt. Durch den erneuten Durchlauf der Optimierung im Falle einer Störung kann der Materialfluss auf die Analgenverfügbarkeit angepasst werden. Sobald die Störung vorbei ist und das Störungsende an die übergeordnete Steuerung übermittelt ist, läuft die Optimierung erneut, um die Produktionsplanung an die neuen Gegebenheiten anzupassen. Analog gilt diese Vorgehensweise auch, wenn Anlagenteile oder Produktionslinie geplant aus der Produktion oder in Betrieb genommen werden.

Die Aufgabe der Erfindung wird weiterhin gelöst mit einem Verfahren mit den Merkmalen des Anspruchs 22. Mehr als eine Warmumformeinrichtung wird durch ein gemeinsames Lager für kaltes, warmes oder heißes Vormaterial versorgt und eine, vorzugsweise mehr als eine, Stranggießanlage führt den Walzstraßen heißes Vormaterial zu. Die Walzstraßen stellen unterschiedliche Fertigprodukte, vorzugsweise unterschiedliche Profile und / oder Abmessungen, her, wobei der Energiebedarf jeder Walzstraße mit einem Verfahren gemäß einem der Ansprüche 1 bis 21 optimiert wird.

Durch die Verknüpfung einer Reihe von Gieß- und Walzanlagen und Lagermöglichkeiten erweitern sich die Optimierungsmöglichkeiten der einzelnen Walzstraßen. Beispielsweise kann heißes Vormaterial ohne zusätzliche Nacherwärmung für ein Produkt mit einem geringeren Umformgrad eingesetzt werden.

Der Beschreibung der Erfindung sind die folgenden zwei Figuren beigefügt:
- Fig. 1:: schematische Darstellung einer Warmumformanlage, welche zur Implementierung des erfindungsgemäßen Verfahrens ausgebildet ist, und
- Fig. 2:: schematisches Ablaufdiagramm einer Ausführungsform eines erfindungsgemäßen Verfahrens.

Die Erfindung wird nachfolgend unter Bezugnahme auf die genannten Figuren in Form von Ausführungsbeispielen detailliert beschrieben. In allen Figuren sind gleiche technische Elemente mit gleichen Bezugszeichen bezeichnet.

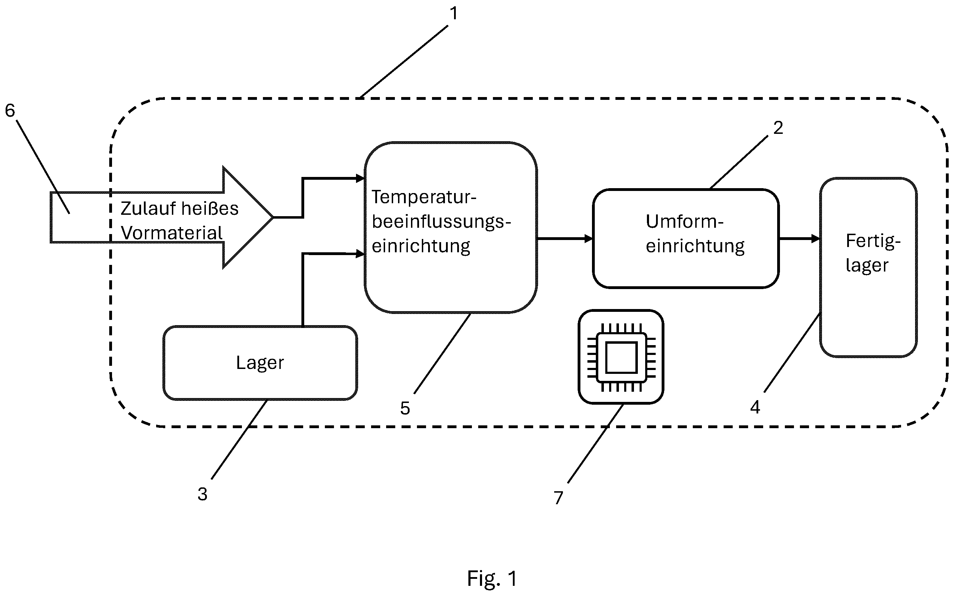

Figur 1 zeigt eine schematische Darstellung einer Warmumformanlage 1, welche zur Implementierung des erfindungsgemäßen Verfahrens ausgebildet ist. Die dargestellte Warmumformeinrichtung 1 umfasst eine Anlage 2 zum Umformen von Vormaterial, insbesondere von Brammen oder Knüppeln, zu Fertigprodukten. Ferner umfasst die Warmumformeinrichtung 1 ein Lager 3 für kaltes, warmes oder heißes Vormaterial und ein Lager 4 für Fertigprodukte. Der Anlage 2 zum Umformen ist eine Temperaturbeeinflussungseinrichtung 5 vorgeschaltet, um die Temperatur des der Anlage 2 zum Umformen zugeführten Vormaterials anzupassen. Dazu ist die Temperaturbeeinflussungsanlage 5 ausgebildet, um das Vormaterial aufzuheizen oder abzukühlen. Ferner umfasst die Warmumformeinrichtung eine unmittelbare Zulaufmöglichkeit 6 für heißes Vormaterial, insbesondere als Zulauf von einer Urformanlage wie einer Stranggießanlage. Die Warmumformeinrichtung 1 umfasst weiterhin eine übergeordnete Steuerung oder Regelung 7.

Das Vormaterial kann beispielsweise unmittelbar von der Stranggießanlage der Walzstraße über die Zulaufmöglichkeit 6 zugeführt werden. Alternativ dazu kann das Vormaterial aus dem Strangguss auch dem Lager 3 für kaltes, warmes oder heißes Vormaterial oder einer Temperaturbeeinflussungseinrichtung 5, bspw. einem Gasofen, Induktionsheizung und / oder einer isolierten Haube, zugeführt werden. Ausgehend von diesen beiden Möglichkeiten kann das Vormaterial der Anlage 2 zum Umformen, insbesondere den Walzgerüsten in der Walzstraße, zugeführt werden.

Der Materialfluss zwischen den Punkten wird mit Zeitpunkten und Temperaturen für einzelne Vorprodukte verfolgt und von der übergeordneten Steuerung oder Regelung 7 überwacht.

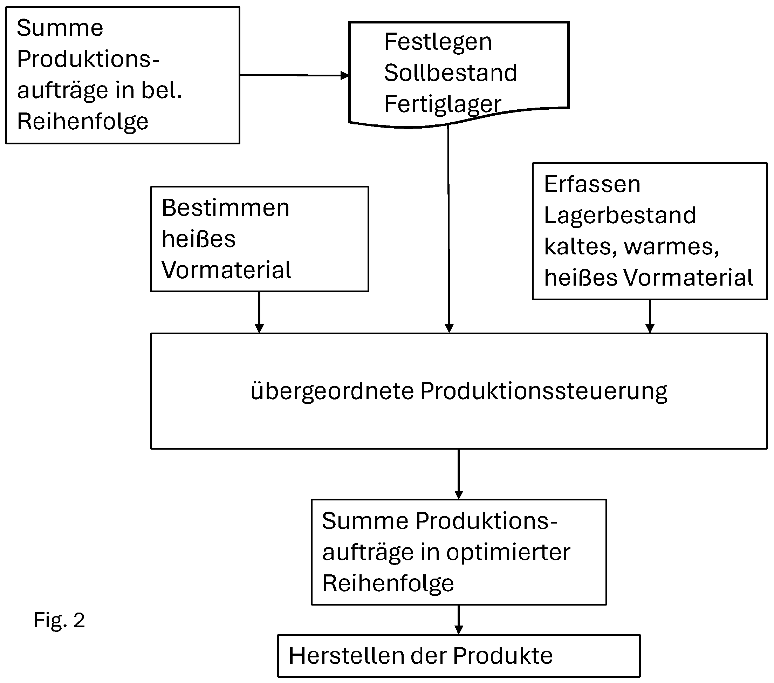

Fig. 2 zeigt ein schematisches Ablaufdiagramm einer Ausführungsform eines erfindungsgemäßen Verfahrens zum Warmumformen von Vormaterial, insbesondere Brammen oder Knüppeln, zu Fertigprodukten mittels einer Warmumformeinrichtung 1, wobei die Warmumformeinrichtung 1 zumindest eine Anlage zum Umformen 2, ein Lager für kaltes, warmes oder heißes Vormaterial 3, ein Lager für die Fertigprodukte 4, eine Temperaturbeeinflussungseinrichtung 5 für das Vormaterial, eine unmittelbare Zulaufmöglichkeit von heißem Vormaterial 6, und eine übergeordnete Steuerung oder Regelung 7 für die Produktionsprozesse aufweist.

Das erfindungsgemäße Verfahren umfasst wenigstens die folgenden Schritte:
- Festlegen eines Soll-Lagerbestandes (S) der Fertigprodukte mit Menge (m_{S}), Abmessung (a_{S}), Werkstoff (W_{S}), Werkstoffeigenschaften (Wₑ) und einem Abrufzeitraum (t_{S});
- Bestimmen eines Zulaufes von heißem Vormaterial 6 zur Umformanlage 2 mit zumindest den Parametern Menge (mₕ), Abmessung (aₕ), Werkstoff (Wₕ) und einer Temperatur (Tₕ), wobei die jeweilige Temperatur des heißen Vormaterials durch ein Temperaturmodell und / oder einer Messung fortlaufend aktualisiert und an die übergeordnete Steuerung oder Regelung 7 übergeben wird;
- Erfassen eines Lagerbestandes an kaltem, warmem und/oder heißem Vormaterial (Lₖ) mit zumindest der verfügbaren Menge (mₖ), Abmessung (aₖ) und Werkstoff (Wₖ);
- Optimieren der Produktionsaufträge (P), der Reihenfolge der Produktionsaufträge (Pₙ) und des Materialflusses zwischen dem Zulauf von heißem Vormaterial 6, dem Lager 3 und der Umformanlage 2 durch die übergeordnete Steuerung oder Regelung 7, wobei die Optimierung vorzugsweise den Energiebedarf minimiert, insbesondere den Energiebedarf unter Berücksichtigung der CO₂-Emission des dazu notwendigen Energieträgers, oder den Energiebedarf der Temperaturbeeinflussungseinrichtung; und
- Herstellen der Fertigprodukte mittels der Warmumformeinrichtung 1 in der optimierten Produktionsreihenfolge (Pₙ), wobei für jeden Produktionsauftrag (P) zumindest die Anstichbedingungen in der ersten Anlage zur Umformung mit Prozessparametern, einem Vormaterial und einem Zeitpunkt zur Umformung bestimmt werden.

Insbesondere wird zur Optimierung ein Algorithmus aus der Gruppe der Mixed Integer Linear Programming Algorithmen (MILP) verwendet. Vorzugweise wird ein Traveling-Salesman-Algorithmus zur Optimierung der Reihenfolge der Produktionsaufträge (Pₙ) verwendet, wobei ein Ort im Traveling-Salesman-Algorithmus durch einen einzelnen Produktionsauftrag (P) und die Kosten im Traveling-Salesman-Algorithmus durch Gewichtungsfaktoren, vorzugsweise repräsentativ für den Energieverbrauch, die CO₂-Emission, das Gefüge, den Durchsatz, die Anlagenparameter und / oder die Produktionsbedingungen, ersetzt werden.

Die stromaufwärts der Anlage zur Umformung 2 positionierte, Temperaturbeeinflussungseinrichtung 5 erhitzt oder kühlt kaltes, warmes oder heißes Vormaterial zum Einstellen einer spezifischen Umformtemperatur und/oder Ausscheidungen, vor einer Abgabe an die Anlage zur Umformung 2. Die für die Temperaturbeeinflussung notwendigen Energiemengen und Temperaturen werden bei der Optimierung des Energiebedarfs berücksichtigt.

Als Vormaterial werden beispielsweise Brammen, vorzugsweise nicht umgeformte Brammen, Knüppel, Warmband, Blech oder urgeformtes Halbzeug, vorzugsweise aus dem Blockguss oder Strangguss, verwendet.

Mittels des erfindungsgemäßen Verfahrens wird beispielsweise gewalzte Bleche oder Bänder, gewalzter Stabstahl, Profil, Träger oder ein geschmiedeter Rohling, vorzugsweise mittels einer nicht beanspruchten Gesenkschmiede oder Schmiedepresse, als Fertigprodukt hergestellt.

### Bezugszeichenliste

| Nummer | Beschreibung |
|---|---|
| 1 | Warmumformeinrichtung |
| 2 | Anlage zum Umformen |
| 3 | Lager für kaltes, warmes und/oder heißes Vormaterial |
| 4 | Fertigprodukt |
| 5 | Temperaturbeeinflussungseinrichtung |
| 6 | Zulauf für heißes Vormaterial |
| 7 | Übergeordnete Steuerung |
| S | Soll-Lagerbestand Fertigprodukte |
| mₛ | Menge |
| A_{S} | Abmessung Fertigprodukt im Soll-Lagerbestand |
| W_{S} | Werkstoff Fertigprodukt im Soll-Lagerbestand |
| t_{S} | Abrufzeitraum des Fertigprodukt im Soll-Lagerbestand |
| mₕ | Menge Zulauf heißes Vormaterial |
| Aₕ | Abmessung Zulauf heißes Vormaterial |
| Wₕ | Werkstoff Zulauf heißes Vormaterial |
| Tₕ | Temperatur Zulauf heißes Vormaterial |
| P | Produktionsaufträge |
| Pₙ | Reihenfolge Produktionsaufträge |

## Patentansprüche

1. **Verfahren** zum Warmumformen von Vormaterial, insbesondere Brammen oder Knüppeln, zu Fertigprodukten mittels einer Warmumformeinrichtung (1), wobei die Warmumformeinrichtung (1) zumindest eine Anlage zum Umformen (2), ein Lager für kaltes, warmes oder heißes Vormaterial (3), ein Lager für die Fertigprodukte (4), eine Temperaturbeeinflussungseinrichtung (5) für das Vormaterial, eine unmittelbare Zulaufmöglichkeit von heißem Vormaterial (6), und eine übergeordnete Steuerung oder Regelung (7) für die Produktionsprozesse aufweist, wobei zumindest die Schritte ausgeführt werden:
- Festlegen eines Soll-Lagerbestandes (S) der Fertigprodukte mit Menge (ms), Abmessung (a_{S}), Werkstoff (W_{S}), Werkstoffeigenschaften (Wₑ) und einem Abrufzeitraum (t_{S});
- Vorbestimmen eines Zulaufes von heißem Vormaterial (6) zur Umformanlage (2) mit zumindest den Parametern Menge (mₕ), Abmessung (aₕ), Werkstoff (Wₕ) und einer Temperatur (Tₕ), wobei die jeweilige Temperatur des heißen Vormaterials durch ein Temperaturmodell und / oder einer Messung fortlaufend aktualisiert und an die übergeordnete Steuerung oder Regelung (7) übergeben wird;
- Erfassen eines Lagerbestandes an kaltem, warmem und/oder heißem Vormaterial (Lₖ) mit zumindest der verfügbaren Menge (mₖ), Abmessung (aₖ) und Werkstoff (Wₖ);
- Optimieren der Produktionsaufträge (P), der Reihenfolge der Produktionsaufträge (Pₙ) und des Materialflusses zwischen dem Zulauf von heißem Vormaterial (6), dem Lager (3) und der Umformanlage (2) durch die übergeordnete Steuerung oder Regelung (7), wobei die Optimierung vorzugsweise den Energiebedarf minimiert, insbesondere den Energiebedarf unter Berücksichtigung der CO₂-Emission des dazu notwendigen Energieträgers, oder den Energiebedarf der Temperaturbeeinflussungseinrichtung; und
- Herstellen der Fertigprodukte mittels der Warmumformeinrichtung (1) in der optimierten Produktionsreihenfolge (Pₙ), wobei für jeden Produktionsauftrag (P) zumindest die Anstichbedingungen in der ersten Anlage zur Umformung mit Prozessparametern, einem Vormaterial und einem Zeitpunkt zur Umformung bestimmt werden.

2. Verfahren nach Anspruch 1,
**dadurch gekennzeichnet, dass**
ein Algorithmus aus der Gruppe der Mixed Integer Linear Programming Algorithmen (MILP) zur Optimierung verwendet wird, insbesondere ein Traveling-Salesman-Algorithmus zur Optimierung der Reihenfolge der Produktionsaufträge (Pₙ), wobei ein Ort im Traveling-Salesman-Algorithmus durch einen einzelnen Produktionsauftrag (P) und die Kosten im Traveling-Salesman-Algorithmus durch Gewichtungsfaktoren, vorzugsweise repräsentativ für den Energieverbrauch, die CO₂-Emission, das Gefüge, den Durchsatz, die Anlagenparameter und / oder die Produktionsbedingungen, ersetzt werden.

3. Verfahren nach Anspruch 1, wobei die übergeordnete Steuerung oder Regelung (7) mit mindestens einem mathematisch-physikalischen Modell datenverbunden ist, das Parameter des Produktionsprozesses abbilden kann.

4. Verfahren nach einem der vorangegangenen Ansprüche,
weiterhin umfassend den Schritt des Bestimmens des Gefüges und / oder der Ausscheidungen für jedes Vormaterial durch ein mit der übergeordneten Steuerung oder Regelung (7) des Produktionsprozesses verbundenes Werkstoffmodell auf Basis der Temperatur (T), dem Werkstoff (W) und dem Zeitverlauf.

5. Verfahren nach einem der vorangegangenen Ansprüche,
umfassend den Schritt des Re-optimierens der Produktionsaufträge (P), der Reihenfolge der Produktionsaufträge (Pₙ) und des Materialflusses zwischen der Zulaufmöglichkeit von heißem Vormaterial (6), dem Lager (3) und der Umformanlage (2) durch die Steuerung oder Regelung (7).

6. Verfahren nach Anspruch 5,
wobei die Re-optimierung iterativ und/oder ereignisgesteuert ausgeführt wird.

7. Verfahren nach Anspruch 5 oder Anspruch 6,
wobei die Re-Optimierung umfasst: eine Umplanung des herzustellenden Produktes, die Einlagerung von Produkten in das Lager (3), die Umwidmung eines fertigen Produktes, oder dergleichen.

8. Verfahren nach einem der vorangegangenen Ansprüche,
**dadurch gekennzeichnet, dass**
ein stromaufwärts der Anlage zur Umformung (2), vorzugsweise mindestens ein Walzgerüst, positionierter, vorzugsweise mindestens ein isolierter, Speicher heißes Vormaterial vor einer Abgabe an die Anlage zur Umformung (2) zwischenspeichert.

9. Verfahren nach einem der vorangegangenen Ansprüche,
**dadurch gekennzeichnet, dass**
in dem Speicher mehr als zwei, vorzugsweise mehr als 5, heiße Vormaterialien zwischengespeichert werden.

10. Verfahren nach Anspruch 9,
wobei ein heißes Vormaterial unabhängig von der Einlagerungsreihenfolge entnommen und der Anlage zur Umformung (2) zugeführt werden kann.

11. Verfahren nach einem der vorangegangenen Ansprüche,
**dadurch gekennzeichnet, dass**
für den Soll-Lagerbestand der Fertigprodukte die Werkstoffeigenschaften für die Fertigprodukte festgelegt werden.

12. Verfahren nach einem der vorangegangenen Ansprüche,
**dadurch gekennzeichnet, dass**
bei der Optimierung des Energiebedarfes die Einhaltung der qualitätsbestimmenden Parameter des Fertigproduktes eingehalten werden müssen.

13. Verfahren nach einem der vorangegangenen Ansprüche,
**dadurch gekennzeichnet, dass**
- eine stromaufwärts der Anlage zur Umformung (2) positionierte, Temperaturbeeinflussungseinrichtung (5) kaltes, warmes oder heißes Vormaterial wärmebehandelt zum Einstellen einer spezifischen Umformtemperatur, und / oder Ausscheidungen, vor einer Abgabe an die Anlage zur Umformung (2); und
- die für die Temperaturbeeinflussung notwendigen Energiemengen und Temperaturen bei der Optimierung des Energiebedarfs berücksichtigt werden.

14. Verfahren nach einem der vorangegangenen Ansprüche,
**dadurch gekennzeichnet, dass**
als Vormaterial Brammen, vorzugsweise nicht umgeformte Brammen, verwendet werden.

15. Verfahren nach einem der Ansprüche 1 bis 13,
**dadurch gekennzeichnet, dass**
als Vormaterial Knüppel verwendet werden.

16. Verfahren nach einem der Ansprüche 1 bis 13,
**dadurch gekennzeichnet, dass**
als Vormaterial urgeformtes, vorzugsweise aus dem Blockguss, Halbzeug verwendet wird.

17. Verfahren nach einem der Ansprüche 1 bis 13,
**dadurch gekennzeichnet, dass**
als Vormaterial ein urgeformtes, vorzugsweise aus dem Strangguss, Halbzeug verwendet wird

18. Verfahren nach einem der vorangegangenen Ansprüche,
**dadurch gekennzeichnet, dass**
ein gewalzter Stabstahl, Profil und / oder Träger als Fertigprodukt hergestellt wird.

19. Verfahren nach einem der vorangegangenen Ansprüche,
**dadurch gekennzeichnet, dass**
ein geschmiedeter Rohling, vorzugsweise mittels einer nicht beanspruchten Gesenkschmiede oder Schmiedepresse, als Fertigprodukt hergestellt wird.

20. Verfahren nach einem der vorangegangenen Ansprüche,
**dadurch gekennzeichnet, dass**
ein Warmband oder Blech als Fertigprodukt hergestellt wird.

21. Verfahren nach einem der vorangegangenen Ansprüche,
**dadurch gekennzeichnet, dass**
- eine technische Störung in einer Anlage der Warmumformeinrichtung durch die übergeordnete Steuerung oder Regelung (7) erfasst wird; und
- bei dem Erfassen einer technischen Störung zumindest das Optimieren der Produktionsaufträge (P), der Reihenfolge der Produktionsaufträge (Pₙ) und des Materialflusses zwischen der Zulaufmöglichkeit von heißem Vormaterial (6), dem Lager (Lₖ) und der Umformanlage (2) erfolgt.

22. Verfahren zum Herstellen von Fertigprodukten aus einem Vormaterial, wobei
- mehr als eine Warmumformungseinrichtung (1) durch zumindest ein gemeinsames Lager für kaltes, warmes oder heißes Vormaterial versorgt wird und eine, vorzugsweise mehr als eine, Stranggießanlage den Warmumformungseinrichtung (1) heißes Vormaterial zuführt; und
- die Warmumformungseinrichtung (1) Fertigprodukte, vorzugsweise unterschiedliche Profile und / oder Abmessungen, herstellen; und
- der Energiebedarf jeder Warmumformungseinrichtung (1) mit einem Verfahren gemäß einem der Ansprüche 1 bis 21 optimiert wird.
